# EUROPÄISCHE PATENTSCHRIFT

(11) **EP 1 102 045 B1**
(45) Veröffentlichungstag und Bekanntmachung des Hinweises auf die Patenterteilung: **09.11.2005**
(21) Anmeldenummer: 00123619.9
(22) Anmeldetag: 28.10.2000
(51) Int. Cl.: G01G 21/28

(54) **Analysenwaage mit Windschutz**
Wind protection for an analysis balance
Balance d'analyse avec une protection contre le vent

(30) Priorität: 19.11.1999 DE 19961748
(43) Veröffentlichungstag der Anmeldung: 23.05.2001
(73) Patentinhaber: SARTORIUS AG, 37075 Göttingen (DE)
(72) Erfinder: Lübke, Eberhard, 37181 Hardegsen (DE); Köhne, Hans-Heinrich, 37081 Göttingen (DE); Winkelbach, Jürgen, 37133 Friedland (DE)

(56) Entgegenhaltungen:
- US-A- 4 664 207
- US-A- 4 700 793
- KUPPER W E: "HIGH-ACCURACY MASS MEASUREMENT FROM MICROGRAMS TO TONS" ISA TRANSACTIONS, INSTRUMENT SOCIETY OF AMERICA. PITTSBURGH, US, Bd. 29, Nr. 4, 1990, Seiten 11-20, XP000175646 ISSN: 0019-0578

## Beschreibung

Die Erfindung bezieht sich auf eine Analysenwaage mit einem Waagengehäuse, das einen Basisbereich und einen hinteren Aufbau umfasst, mit einer Waagschale, mit einem die Waagschale allseitig umgebenden Windschutz, dessen Bodenfläche vom Basisbereich des Waagengehäuses und dessen Rückwand vom hinteren Aufbau des Waagengehäuses gebildet wird und der außerdem eine feststehende Frontscheibe, zwei bewegliche Seitenscheiben und einen beweglichen oberen Schieber aufweist, wobei die beweglichen Wandelemente von Hand oder motorisch geöffnet bzw. geschlossen werden können.

Waagen dieser Art sind allgemein bekannt und beispielsweise in der DE 35 08 873 C1 (US 4,664,207) oder der EP 234 008 B1 (US 4,700,793) beschrieben.

In der DE 35 08 873 C1 ist die rahmenlose Frontscheibe am Basisbereich des Waagengehäuses befestigt und wird am oberen Ende zusätzlich durch zwei Führungsschienen gehalten und mit dem hinteren Aufbau des Waagengehäuses verbunden. Diese beiden Führungsschienen dienen gleichzeitig als Führungen für den oberen Schieber und für die Seitenscheiben. Dies führt zu einem sehr einfachen Aufbau für die Führung des oberen Schiebers und zu guter Stabilität für die Frontscheibe. Außerdem ist der optische Einblick auf das Wägegut von vorn und von den Seiten praktisch nicht gestört. Nur der optische Einblick und die Zugänglichkeit von schräg oben sind durch die feststehenden Führungsschienen behindert.

In der EP 234 008 sind die Zugänglichkeit und der optische Einblick von schräg oben unbehindert, da die Führungsteile, die die Seitenscheiben mit dem oberen Schieber verbinden, in den oder über den hinteren Aufbau des Waagengehäuses schiebbar sind. Diese Bauart ist jedoch kompliziert. Das Verschieben der Führungsteile führt außerdem dazu, dass bei zurückgeschobenem oberen Schieber die Seitenscheiben in ihrem oberen Bereich nur noch ganz hinten geführt werden, während sie bei vorgeschobenem oberen Schieber auf ihrer ganzen Länge geführt werden. Wenn beide Seitenscheiben zurückgeschoben sind, fehlt umgekehrt die Stütze für die Führungsteile des oberen Schiebers, sodass die Gefahr besteht, dass die Führungsteile auf Grund mangelnder Steifigkeit sich nach vorne zu etwas absenken und die Seitentüren in diesem Fall schwergängig werden. Auch der obere Schieber ist relativ schwergängig, da beim Bewegen sowohl die Reibung der mitbewegten Führungsteile als auch die Reibung zwischen den Führungsteilen und den Seitenscheiben überwunden werden muss. - Außerdem ist in der EP 234 008 der optische Einblick von vorn seitlich durch einen umlaufenden Rahmen um die Frontscheibe behindert.

Aufgabe der Erfindung ist es daher, die Vorteile der beiden angegebenen Bauarten miteinander zu verbinden und die Nachteile beider Bauarten zu vermeiden. Insbesondere sollen die Seitenscheiben und der obere Schieber ohne gegenseitige Beeinflussung verschiebbar sein, der optische Einblick auf das Wägegut soll weder von vorn noch von der Seite noch von oben oder schräg oben behindert sein und die Zugänglichkeit von oben und von den Seiten soll ebenfalls unbehindert sein.

Erfindungsgemäß wird dies dadurch erreicht, dass die feststehende Frontscheibe rahmenlos ausgeführt ist und nur am Basisbereich des Waagengehäuses befestigt ist, dass die Seitenscheiben am Basisbereich geführt und am hinteren Aufbau nur gegen Verkippen gesichert sind und dass der obere Schieber durch mindestens eine Rundstangengleitführung am hinteren Aufbau des Waagengehäuses geführt ist.

Vorteilhafte Ausgestaltungen ergeben sich aus den Unteransprüchen.

Die Erfindung wird im Folgenden anhand der schematischen Figuren beschrieben. Dabei zeigt:
- Figur 1: eine perspektivische Ansicht der Waage,
- Figur 2: einen vertikalen Querschnitt durch das gehäusefeste Teil der Rundstangengleitführung,
- Figur 3: einen vertikalen Querschnitt durch das bewegliche Teil der Rundstangengleitführung und
- Figur 4: einen horizontalen Schnitt durch eine beispielhafte Ausführung der Frontscheibe,

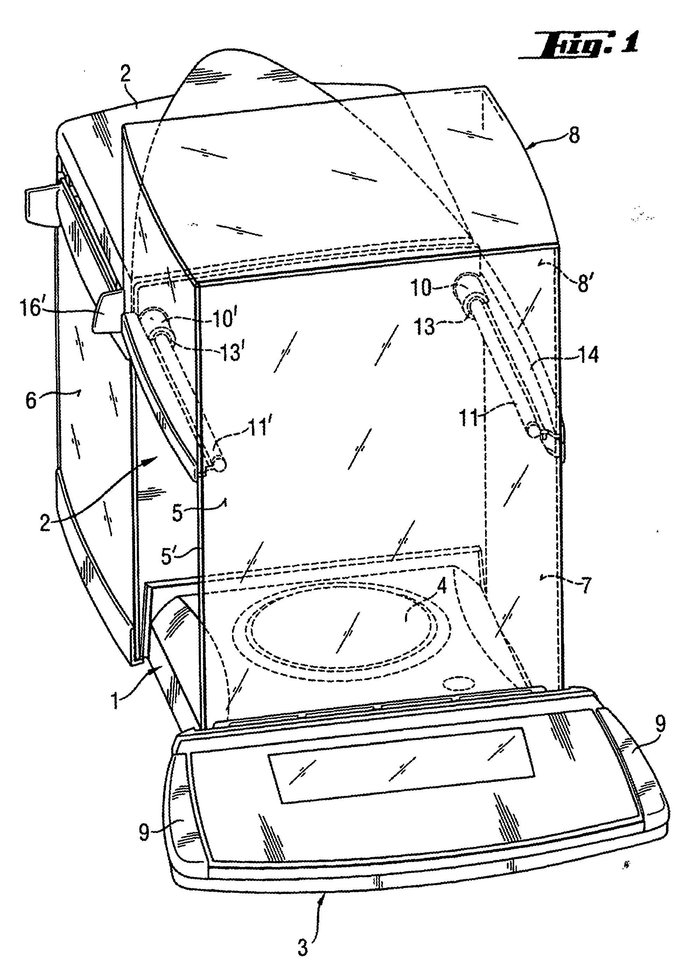

In Figur 1 ist die Waage in einer perspektivischen Ansicht dargestellt. Die Waage besteht aus einem Basisbereich 1 des Gehäuses, einem hinteren Aufbau 2 des Gehäuses, einem gehäusefesten Anzeige- und Bedienteil 3, einer Waagschale 4 und einem Windschutz, der die Waagschale allseitig umgibt. Der Boden des Windschutzes wird durch den Basisbereich 1 des Gehäuses gebildet, die Rückwand durch den hinteren Aufbau 2 des Gehäuses, die Vorderfront durch eine stabile, feststehende, durchsichtige Frontscheibe 5, deren linke Seitenkante mit 5' bezeichnet ist. Die beiden Seitentüren 6 und 7, von denen die linke Seitentür 6 zurückgeschoben (= geöffnet) gezeichnet ist, begrenzen den Windschutz seitlich, der obere bewegliche Schieber 8, der kastenförmig erhöht ist, begrenzt den Windschutz nach oben.

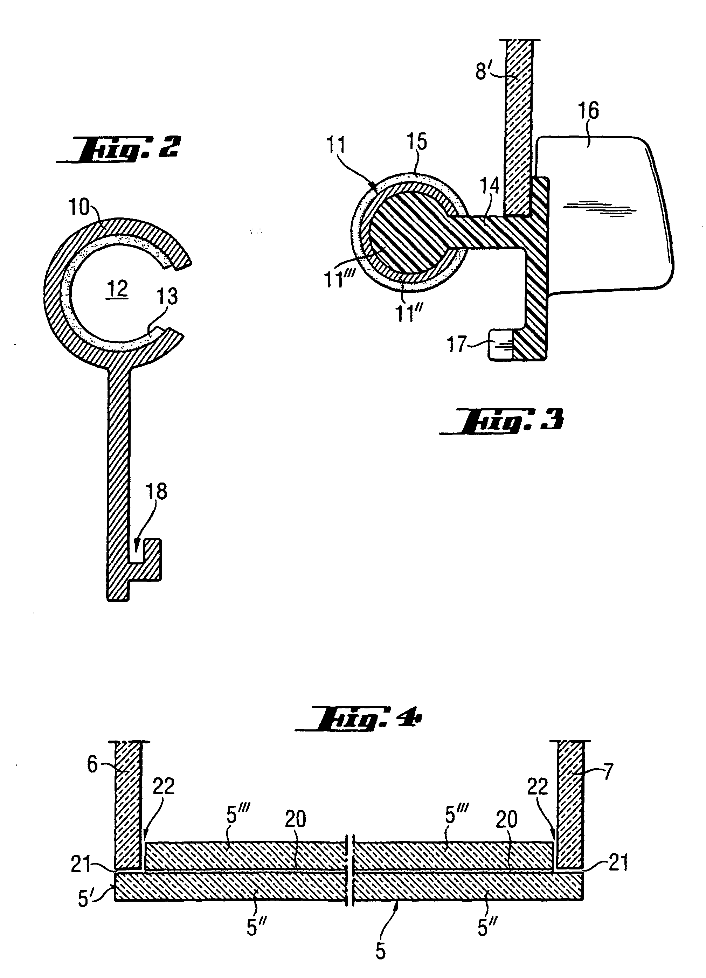

Die Führung des oberen Schiebers 8 erkennt man teilweise in Figur 1, zur Erläuterung der Funktion ist in Figur 2 ein vertikaler Querschnitt durch das gehäusefeste Teil 10 der Führung gezeigt und in Figur 3 ein vertikaler Querschnitt durch den beweglichen Rundstab 11 der Führung. Das gehäusefeste Teil der Rundstangengleitführung ist ein Strangpressteil 10 und umschließt C-förmig einen zylindrischen Innenraum (Hohlraum) 12. In diesem Innenraum 12 ist am vorderen, in Figur 1 erkennbaren Ende eine ebenfalls C-förmige Gleitbuchse 13 aus Kunststoff eingeklebt. In dieser Gleitbuchse 13 ist ein Rundstab 11 gleitend beweglich, der der Deutlichkeit halber getrennt in Figur 3 gezeichnet ist. Der Rundstab 11 geht seitlich in einen Steg 14 über, an dem der seitliche Bereich 8' des oberen Schiebers 8 befestigt ist. Am hinteren Ende des Rundstabes 11, der in Figur 1 im hinteren Aufbau 2 des Gehäuses verborgen ist, ist eine zweite Gleitbuchse 15 vorhanden, die fest mit dem Rundstab 11 verbunden ist. In der in Figur 1 gezeigten geschlossenen Stellung des oberen Schiebers 8 befindet sich die zweite Gleitbuchse 15 also dicht hinter der ersten, gehäusefesten Gleitbuchse 13. Beim Öffnen des oberen Schiebers 8 bewegt sich die Gleitbuchse 15 mit dem Rundstab 11 zusammen und der Abstand der beiden Gleitbuchsen 13 und 15 wird größer. Dadurch nimmt die Belastung der Gleitbuchsen ab. - Insgesamt zeichnet sich die Rundstangengleitführung durch geringen Platzbedarf aus und durch die Benutzung einfach herstellbarer Teile.

Der bewegliche Rundstab 11 ist vorteilhafterweise aus einem äußeren, geschlitzten Metallrohr 11" und einem inneren Kunststoffkern 11"' aufgebaut. Der Kunststoffkern 11"' geht in den seitlichen Steg 14 über, der ebenfalls aus Kunststoff besteht. Bei der Montage wird das geschlitzte Metallrohr 11" einfach auf den Kunststoffkern 11"' aufgeschoben. Das Metallrohr 11" kann z. B. aus Stahl oder aus Aluminium bestehen. Die Aluminium-Ausführung kann z. B. im Strangpressverfahren hergestellt werden; die Oberflächenhärte und gute Gleiteigenschaften werden dann durch eine spezielle Oberflächenvergütung erreicht.

Weiter erkennt man in Figur 3 einen seitlichen Schiebegriff 16, der zum Verschieben des oberen Schiebers 8 von Hand dient. In Figur 1 ist nur der Schiebegriff 16' auf der gegenüberliegenden linken Seite des Schiebers 8 erkennbar, der mit dem beweglichen Teil 11' der linken Rundstangengleitführung verbunden ist. Weiter erkennt man in Figur 3 eine Zahnstange 17, die mit dem beweglichen Rundstab 11 der Rundstangengleitführung verbunden ist. In diese Zahnstange 17 greift ein Ritzel eines Elektromotors, der im hinteren Aufbau 2 des Gehäuses untergebracht ist, sodass der obere Schieber auch motorisch bewegt werden kann. Zum Ansteuern dieses Motors dient z. B. eine der Bedienungstasten 9 am Anzeige- und Bedienteil 3.

Toleranzen zwischen der rechten Rundstangengleitführung 10/11 und dem beweglichem Teil 11' der linken Rundstangengleitführung werden durch die Elastizität des Schiebers 8, besonders durch seine Kastenform, ausgeglichen. Es ist jedoch auch möglich, statt der zwei Rundstangengleitführungen nur eine einzige vorzusehen - beispielsweise auf der rechten Seite - und den Schieber 8 auf der anderen Seite z. B. nur durch zwei aufeinander gleitende Auflageflächen abzustützen.

Die Führung der beiden Seitenscheiben 6 und 7 am Basisbereich 1 des Gehäuses ist konventioneller Art und daher hier nicht näher zeichnerisch dargestellt und erläutert. In der schon zitierten DE 35 08 873 C1 beispielsweise findet man konstruktive Einzelheiten. Zur Sicherung gegen ein Abkippen der Seitenscheiben 6 und 7 ist am gehäusefesten Strangpressteil 10 der Rundstangengleitführung seitlich ein Graben 18 eingearbeitet (Figur 2), in den ein Haken an der Seitenscheibe 7 hineinragt. - Es sei jedoch ausdrücklich darauf hingewiesen, dass diese grabenförmige Führung 18 am gehäusefesten Strangpressteil 10 der Rundstangengleitführung angeordnet ist, also gehäusefest ist. Das bewegliche Strangpressteil 11 der Rundstangengleitführung bildet an keiner Stelle eine Führung für die Seitenscheiben 6 oder 7, umgekehrt bilden auch die Seitenscheiben an keiner Stelle eine Führung für den oberen Schieber, sodass eine Kopplung zwischen oberem Schieber und einer der Seitenscheiben über Reibungseffekte also ausgeschlossen ist.

Eine vorteilhafte Ausgestaltung der Frontscheibe ist in Figur 4 im Schnitt gezeigt. Die Frontscheibe 5 besteht aus zwei Einzelscheiben (Glasscheiben) 5" und 5"', die über eine Klebschicht 20 miteinander verbunden sind. Die hintere Einzelscheibe 5"' ist etwas kleiner als die vordere Einzelscheibe 5", sodass eine Stufe wie in Figur 4 erkennbar entsteht. Die jeweilige Seitenscheibe 6 bzw. 7 erzeugt im Zusammenwirken mit dieser Stufe eine Labyrinthdichtung 21/22, sodass auch ohne gesonderte elastische Dichtungen das Innere des Wägeraumes vor Luftzug geschützt ist. Dabei ist der Schutz vor dem Atem der Bedienungsperson vor der Waage besonders gut, da der äußere Schlitz 21 der Labyrinthdichtung genau quer zur Richtung des Atemluftzuges liegt. Durch diese Gestaltung der Doppelscheibe kann man auf einen umlaufenden Rahmen mit Dichtungen verzichten und sichert so den freien Einblick auf das Wägegut, ohne die Funktion als Windschutz zu beeinträchtigen.

Durch die Klebschicht 20 zwischen den beiden Scheiben wird bei entsprechender Ausführung die Frontscheibe 5 zu einer Sicherheitsglasscheibe, was für spezielle Anwendungen von Vorteil ist. Durch den Verbund der beiden Glasscheiben 5" und 5"' können aber auch spezielle Oberflächenbeschichtungen - beispielsweise Reflektionsschichten für Wärmestrahlung - eingesetzt werden, die wenig abriebfest sind und deshalb an zugänglichen Scheibenoberflächen ungern eingesetzt werden. An den inneren Oberflächen der beiden Glasscheiben 5" und 5"' sind diese empfindlichen Schichten ohne weiteres einsetzbar.

## Patentansprüche

1. Analysenwaage mit einem Waagengehäuse, das einen Basisbereich und einen hinteren Aufbau umfasst, mit einer Waagschale, mit einem die Waagschale allseitig umgebenden Windschutz, dessen Bodenfläche vom Basisbereich des Waagengehäuses und dessen Rückwand vom hinteren Aufbau des Waagengehäuses gebildet wird und der außerdem eine feststehende Frontscheibe, zwei bewegliche Seitenscheiben und einen beweglichen oberen Schieber aufweist, wobei die beweglichen Wandelemente von Hand oder motorisch geöffnet bzw. geschlossen werden können, **dadurch gekennzeichnet, dass** die feststehende Frontscheibe (5) rahmenlos ausgeführt ist und nur am Basisbereich (1) des Waagengehäuses befestigt ist, dass die Seitenscheiben (6, 7) am Basisbereich (1) geführt sind und am hinteren Aufbau (2) nur gegen Verkippen gesichert sind und dass der obere Schieber (8) durch mindestens eine Rundstangengleitführung (10, 11) am hinteren Aufbau (2) des Waagengehäuses geführt ist.

2. Analysenwaage nach Anspruch 1, **dadurch gekennzeichnet, dass** der obere Schieber (8) durch zwei Rundstangengleitführungen (10, 10', 11, 11') am hinteren Aufbau (2) des Waagengehäuses geführt ist.

3. Analysenwaage nach einem der Ansprüche 1 oder 2, **dadurch gekennzeichnet, dass** jede Rundstangengleitführung (10, 11) zwei Gleitbuchsen aufweist, wobei eine Gleitbuchse (13) gehäusefest angeordnet ist und die andere Gleitbuchse (15) zusammen mit dem Schieber (8) beweglich ist.

4. Analysenwaage nach einem der Ansprüche 1 - 3, **dadurch gekennzeichnet, dass** der gehäusefeste Teil der Rundstangengleitführung aus einem Strangpressteil (10) mit C-förmigem Querschnitt besteht.

5. Analysenwaage nach Anspruch 4, **dadurch gekennzeichnet, dass** in dem inneren runden Hohlraum(12) des Strangpressteiles (10) eine ebenfalls C-förmige Gleitbuchse (13) befestigt ist.

6. Analysenwaage nach Anspruch 5, **dadurch gekennzeichnet, dass** die Gleitbuchse (13) am vorderen Ende des Strangpressteiles (10) angeordnet ist.

7. Analysenwaage nach einem der Ansprüche 1 - 6, **dadurch gekennzeichnet, dass** der bewegliche Teil der Rundstangengleitführung (10, 10', 11, 11')aus einer Stange mit rundem Querschnitt besteht, die durch einen seitlichen Steg (14) mit dem oberen Schieber (8) verbunden ist.

8. Analysenwaage nach Anspruch 7, **dadurch gekennzeichnet, dass** auf dem Rundstab (11) eine runde Gleitbuchse (15) befestigt ist.

9. Analysenwaage nach Anspruch 8, **dadurch gekennzeichnet, dass** die Gleitbuchse (15) am hinteren Ende des Rundstabes (11) befestigt ist.

10. Analysenwaage nach einem der Ansprüche 7 - 9, **dadurch gekennzeichnet, dass** der Rundstab (11) aus einem geschlitztem Metallrohr (11") besteht, das auf einen Kunststoffkern (11"') aufgeschoben ist.

11. Analysenwaage nach einem der Ansprüche 7 - 10, **dadurch gekennzeichnet, dass** am seitlichen Steg (14) eine Zahnstange (17) für die motorische Bewegung des Schiebers (8) angeordnet ist.

12. Analysenwaage nach einem der Ansprüche 7 - 11, **dadurch gekennzeichnet, dass** am seitlichen Steg (14) ein Schiebegriff (16) zum manuellen Bewegen des Schiebers (8) vorhanden ist.

13. Analysenwaage nach einem der Ansprüche 1 - 12, **dadurch gekennzeichnet, dass** die Frontscheibe (5) aus zwei Glasscheiben (5", 5"') etwas verschiedener Größe so zusammengefügt ist, dass zusammen mit den Vorderkanten der Seitenscheiben (6, 7) und der Vorderkante des oberen Schiebers (8) ein Dichtungslabyrinth (21/22) gebildet wird.

14. Analysenwaage nach Anspruch 13, **dadurch gekennzeichnet, dass** zwischen den beiden Glasscheiben (5", 5"') der Frontscheibe (5) eine Funktionsschicht (20) angeordnet ist.

15. Analysenwaage nach Anspruch 14, **dadurch gekennzeichnet, dass** die Funktionsschicht (20) eine Wärmeschutzschicht ist.

## Claims

1. Analysis scales with a scales housing, which comprises a base region and a rear body, with a pan, with a wind protection means, which surrounds the pan at all sides and the base surface and the rear wall of which are formed by, respectively, the base region of the scales housing and the rear body of the scales housing, the wind protection means additionally comprising a stationary front pane, two movable side panes and a movable upper slide, wherein the movable wall elements can be opened or closed by hand or motor, **characterised in that** the stationary front pane (5) is constructed to be frameless and is fastened only to the base region (1) of the scales housing, that the side panes (6, 7) are guided at the base region (1) and are secured at the rear body (2) only against tipping and that the upper slide (8) is guided by at least one round rod sliding guide (10, 11) at the rear body (2) of the scales housing.

2. Analysis scales according to claim 1, **characterised in that** the upper slide (8) is guided at the rear body (2) of the scales housing by two round rod sliding guides (10, 10', 11,11').

3. Analysis scales according to one of claims 1 and 2, **characterised in that** each round rod sliding guide (10, 11) comprises two slide bushes, wherein one slide bush (13) is arranged to be fixed relative to the housing and the other slide bush (15) is movable together with the slide (8).

4. Analysis scales according to one of claims 1 to 3, **characterised in that** the part, which is fixed relative to the housing, of the round rod sliding guide consists of an extruded part (10) with C-shaped- cross-section.

5. Analysis scales according to claim 4, **characterised in that** a similarly C-shaped slide bush (13) is fastened in the inner round cavity (12) of the extruded part (10).

6. Analysis scales according to claim 5, **characterised in that** a slide bush (13) is arranged at the front end of the extruded part (10).

7. Analysis scales according to one of claims 1 to 6, **characterised in that** the movable part of the round rod sliding guide (10, 10', 11, 11') consists of a rod with round cross-section which is connected by a lateral web (14) with the upper slide (8).

8. Analysis scales according to claim 7, **characterised in that** a round slide bush (15) is fastened on the round rod (11).

9. Analysis scales according to claim 8, **characterised in that** the slide bush (15) is fastened at the rearward end of the round rod (11).

10. Analysis scales according to one of claims 7 to 9, **characterised in that** the round rod (11) consists of a slotted metal tube (11") pushed onto a plastics material core (11'").

11. Analysis scales according to one of claims 7 to 10, **characterised in that** a rack (17) for the motorised movement of the slide (8) is arranged at the lateral web (14).

12. Analysis scales according to one of claims 7 to 11, **characterised in that** a slide grip (16) for the manual movement of the slide (8) is present at the lateral web (14).

13. Analysis scales according to one of claims 1 to 12, **characterised in that** the front pane (5) is so composed of two glass panes (5", 5"') of somewhat different size that together with the front edges of the side panes (6, 7) and the front edge of the upper slide (8) a sealing labyrinth (21/22) is formed.

14. Analysis scales according to claim 13, **characterised in that** a functional layer (20) is arranged between the two glass panes (5", 5"') of the front pane (5).

15. Analysis scales according to claim 14, **characterised in that** the functional layer (20) is a thermal protection layer.

## Revendications

1. Balance de précision avec un boîtier de balance qui comprend une zone de base et une structure arrière, avec un plateau, avec un paravent qui entoure le plateau de tous les côtés, dont la surface du fond est formée par la zone de base du boîtier de balance et la paroi arrière par la structure arrière du boîtier de balance et qui comporte en outre une vitre frontale fixe, deux vitres latérales mobiles et un coulisseau supérieur mobile, les éléments de parois mobiles pouvant être ouverts et/ou fermés manuellement ou par un moteur, **caractérisée en ce que** la vitre frontale fixe (5) est réalisée sans cadre et n'est fixée qu'à la zone de base (1) du boîtier de balance, **en ce que** les vitres latérales (6, 7) sont guidées sur la zone de base (1) et sont seulement protégées contre le renversement sur la structure arrière (2) et **en ce que** le coulisseau supérieur (8) est guidé par au moins un guide coulissant à barre ronde (10, 11) sur la structure arrière (2) du boîtier de balance.

2. Balance de précision selon la revendication 1, **caractérisée en ce que** le coulisseau supérieur (8) est guidé par deux guides coulissants à barre ronde (10, 10', 11, 11') sur la structure arrière (2) du boîtier de balance.

3. Balance de précision selon une des revendications 1 ou 2, **caractérisée en ce que** chaque guide coulissant à barre ronde (10, 11) comporte deux douilles de glissement, une douille de glissement (13) étant fixée sur le boîtier et l'autre douille de glissement (15) pouvant être déplacée en même temps que le coulisseau (8).

4. Balance de précision selon une des revendications 1 à 3, **caractérisée en ce que** la partie fixée au boîtier du guide coulissant à barre ronde est composée d'un élément extrudé (10) avec section transversale en forme de C.

5. Balance de précision selon la revendication 4, **caractérisée en ce qu'**une douille de glissement (13) également en forme de C est fixée dans l'espace creux intérieur rond (12) de l'élément extrudé (10).

6. Balance de précision selon la revendication 5, **caractérisée en ce que** la douille de glissement (13) est disposée à l'extrémité avant de l'élément extrudé (10).

7. Balance de précision selon une des revendications 1 à 6, **caractérisée en ce que** la partie mobile du guide coulissant à barre ronde (10, 10', 11, 11') est composée d'une barre à section transversale ronde qui est reliée au coulisseau supérieur (8) par une bride latérale (14).

8. Balance de précision selon la revendication 7, **caractérisée en ce qu'**une douille de glissement ronde (15) est fixée sur la barre ronde (11).

9. Balance de précision selon la revendication 8, **caractérisée en ce que** la douille de glissement (15) est fixée à l'extrémité arrière de la barre ronde (11).

10. Balance de précision selon une des revendications 7 à 9, **caractérisée en ce que** la barre ronde (11) est composée d'un tube métallique fendu (11") qui est emboîté sur un coeur en matière plastique (11"').

11. Balance de précision selon une des revendications 7 à 10, **caractérisée en ce qu'**une crémaillère (17) pour le déplacement motorisé du coulisseau (8) est disposée sur la bride latérale (14).

12. Balance de précision selon une des revendications 7 à 11, **caractérisée en ce qu'**il y a une poignée coulissante (16) pour le déplacement manuel du coulisseau (8) sur la bride latérale (14).

13. Balance de précision selon une des revendications 1 à 12, **caractérisée en ce que** la vitre frontale (5) est assemblée à partir de deux vitres en verre (5'', 5''') de tailles légèrement différentes de manière à former avec les arêtes avant des vitres latérales (6, 7) et l'arête avant du coulisseau supérieur (8) un labyrinthe d'étanchéité (21/22).

14. Balance de précision selon la revendication 13, **caractérisée en ce qu'**une couche fonctionnelle (20) est disposée entre les deux vitres en verre (5'', 5''') de la vitre frontale (5).

15. Balance de précision selon la revendication 14, **caractérisée en ce que** la couche fonctionnelle (20) est une couche calorifuge.
